# EUROPEAN PATENT APPLICATION

(11) **EP 4 733 959 A1**
(43) Date of publication of application: **29.04.2026**
(21) Application number: 25211386.5
(22) Date of filing: 27.10.2025
(51) Int. Cl.: G06F 16/9538

(54) **SEARCH OPTIMIZATION USING QUERY-BASED CONTEXTUAL FEATURES**

(30) Priority: 28.10.2024 US 202418928645
(71) Applicant: eBay Inc., San Jose, CA 95125 (US)
(72) Inventor: SHENG, Taoran, Campbell, 95008 (US); MUTHIAH, Sathappan, Santa Clara, 95051 (US); KABA, Mustafa Devrim, San Jose, 95125 (US); ISLAM, Atiq, Jericho, 11753 (US)
(74) Representative: Murgitroyd & Company

(57) **Abstract**

A search query is received. A first plurality of items is identified. A reference item is identified based on the search query and the first plurality of items. A plurality of contextual distances is determined using a distance calculation metric. A machine learning model is used to rank a second plurality of items based on the plurality of contextual distances. The second plurality of items is caused to be displayed. The second plurality of items is arranged in an order in accordance with the ranking.

## Description

### TECHNICAL FIELD

The present disclosure generally relates to data processing using machine learning technologies. More particularly, various embodiments described herein provide for systems, methods, techniques, instruction sequences, and devices that facilitate search optimization using query-based contextual features.

### BACKGROUND

Existing e-commerce systems face complex challenges in delivering relevant results to users. These systems struggle to process vast product catalogs efficiently and interpret user intent from often ambiguous search queries. Another significant challenge lies in understanding and adapting to users' evolving intentions, which can change rapidly within a day or a single browsing session. Balancing personalization with query relevance adds another layer of complexity. Existing systems often struggle to rank search results effectively, taking into account various factors, including query relevance, item attributes, pricing, and user behavior patterns.

### SUMMARY

The invention provides a method, system, and machine-storage medium as defined in the appended claims.

According to one aspect, the invention provides a method comprising: receiving a search query; identifying a first plurality of items being accessed by a user within a predetermined time period; identifying, using a distance calculation metric, a reference item based on the search query and the first plurality of items; determining, using the distance calculation metric, a plurality of contextual distances, each contextual distance representing a contextual relatedness between the reference item and a corresponding item in a second plurality of items returned as a result of an execution of the search query; ranking, using a machine learning model, the second plurality of items based on the plurality of contextual distances; and causing display of the second plurality of items, the second plurality of items being arranged in an order based on the ranking.

According to another aspect, the invention provides a system comprising: one or more hardware processors; and at least one machine-storage medium for storing instructions that, when executed by the one or more hardware processors, cause the one or more hardware processors to perform the method according to the one aspect.

According to a further aspect, the invention provides a machine-storage medium for storing instructions that, when executed by one or more hardware processors, cause the one or more hardware processors to perform the method according to the one aspect.

### BRIEF DESCRIPTION OF THE DRAWINGS

In the drawings, which are not necessarily drawn to scale, like numerals may describe similar components in different views. To easily identify the discussion of any particular element or act, the most significant digit or digits in a reference number refer to the figure number in which that element is first introduced. Some embodiments are illustrated by way of examples, and not limitations, in the accompanying figures.
FIG. 1 is a block diagram showing an example data system that includes a data management system, according to various examples of the present disclosure.
FIG. 2 is a block diagram illustrating an example data management system that facilitates search optimization using query-based contextual features, according to various examples of the present disclosure.
FIG. 3 is a flowchart illustrating an example method for facilitating search optimization using query-based contextual features, according to various examples of the present disclosure.
FIG. 4 is a flowchart illustrating an example method for facilitating search optimization using query-based contextual features, according to various examples of the present disclosure.
FIG. 5 is a flowchart illustrating an example method for facilitating search optimization using query-based contextual features, according to various examples of the present disclosure.
FIG. 6 is a diagram illustrating a data flow that facilitates search optimization using query-based contextual features, according to various examples of the present disclosure.
FIG. 7 is a block diagram illustrating a representative software architecture, which may be used in conjunction with various hardware architectures herein described, according to various examples of the present disclosure.
FIG. 8 is a block diagram illustrating components of a machine able to read instructions from a machine storage medium and perform any one or more of the methodologies discussed herein according to various examples of the present disclosure.

### DETAILED DESCRIPTION

The description that follows includes systems, methods, techniques, instruction sequences, and computing machine program products that embody illustrative embodiments of the present disclosure. In the following description, for purposes of explanation, numerous specific details are set forth in order to provide a thorough understanding of embodiments. It will be evident, however, to one skilled in the art that the present inventive subject matter may be practiced without these specific details.

Reference in the specification to "one embodiment" or "an embodiment" means that a particular feature, structure, or characteristic described in connection with the embodiment is included in at least one embodiment of the present subject matter. Thus, the appearances of the phrase "in one embodiment" or "in an embodiment" appearing in various places throughout the specification are not necessarily all referring to the same embodiment.

For purposes of explanation, specific configurations and details are set forth in order to provide a thorough understanding of the present subject matter. However, it will be apparent to one of ordinary skill in the art that embodiments of the subject matter described may be practiced without the specific details presented herein, or in various combinations, as described herein. Furthermore, well-known features may be omitted or simplified in order not to obscure the described embodiments. Various embodiments may be given throughout this description. These are merely descriptions of specific embodiments. The scope or meaning of the claims is not limited to the embodiments given.

Various examples include systems, methods, and non-transitory computer-readable media that facilitate search optimization using query-based contextual features, according to various examples of the present disclosure. In modern e-commerce platforms, improving the relevance of search results is important for enhancing user engagement and improving the efficiency of product discovery. To address various challenges in search optimization, new query-based contextual features (also referred to as contextualization features) have been developed for a Machine Learning Ranker (MLR) model, which can used to predict items relevant to buyers' search queries, personal preferences, and behavioral patterns. These new query-based contextual features help integrate users' personal preferences with their immediate search intent, thereby enhancing user engagement, improving the efficiency of product discovery, and ultimately increasing conversion rates. Users' personal preferences can be derived from characteristics (e.g., titles, sale prices, item condition states, listing types) of their previously viewed items. Received search queries can serve as direct indicators of users' immediate search intent. One or more reference items can be identified from a user's recent viewing history within a predetermined time period, such as a day, a week, or a few months. The one or more reference items can be identified by evaluating contextual distances between a current search query and each of the items in the viewing history. Under this approach, the reference items are closely aligned with the user's immediate search intent, serving as key reference points for ranking the relevance of the recalled items (e.g., items on a Search Result Page (SRP)) retrieved from executing the current search query. The MLR model can be used to determine a ranking for the recalled items displayed on the SRP based on the similarity between a reference item and each of the recalled items. According to the ranking, the recalled items are rearranged based on contextual distance scores assigned to each item. In particular, the item with the highest contextual relevance, indicated by the top contextual distance score (or by the shortest contextual distance), is ranked first, as it is the one the user is most likely to view and purchase. The ranked search results can be presented to the user via a user interface on a device, thereby providing a personalized search experience that reflects both the buyer's preferences and immediate search goals.

In various examples, a data management system receives search queries (also referred to as current search queries or a currently received search queries) via user's devices. The data management system can identify a user identifier based on information associated with a device. Based on the user identifier, the data management system identifies items (e.g., the first plurality of items) that a user has recently interacted with (e.g., viewed, clicked, or made purchases). The recency of the interaction history can be defined by a predetermined time period, such as a day, a month, or a few months. Since users often follow patterns in their search journeys, the items they've recently interacted with provide a key reference point for identifying items they are most interested in.

In various examples, the data management system uses one or more distance calculation metrics to identify one or more reference items based on the search query and the first plurality of items. A reference item is selected based on its contextual distance to the current search query and is considered to be the best representative of the user's immediate search intent in the context of their recent browsing history. A distance calculation metric can be a mathematical function that measures contextual distance between objects (e.g., data points). A shorter distance indicates greater relevance (or similarity) between data points, and a longer distance suggests the opposite. The data management system can use various types of distance calculation metrics, including, without limitation, normalized compression Distance (NCD) metric, Jaccard Unigrams Similarity metric, Jaccard Bigrams Similarity metric, Jaccard Trigrams Similarity metric, cosine similarity metric, Euclidean distance metric, Manhattan distance metric, Minkowski distance metric, and Hamming distance metric.

In various examples, the data management system executes the current search query against one or more databases and identifies queried items (e.g., the second plurality of items) arranged in a certain order (e.g., default order) on a Search Result Page (SRP). The data management system uses one or more distance calculation metrics to determine a plurality of contextual distances (e.g., the first plurality of contextual distances) between a reference item and each queried item on the SRP. In various examples, the data management system can use the same distance calculation metric for the contextual distance determination operation as it does for the reference item identification operation. This consistency in distance calculation ensures uniformity in how distances are measured, leading to consistent results and interpretations.

In various examples, the data management system can use textual data and text-based distance calculation metrics to determine contextual relatedness between items and between items and search queries. Distance calculation metrics used for text-based similarity determination can include, without limitation, normalized compression Distance (NCD) metric, Jaccard Unigrams Similarity metric, Jaccard Bigrams Similarity metric, and Jaccard Trigrams Similarity metric. Alternatively, the data management system can use embedding-based representations of items and search queries for similarity determination. Embeddings are vector representations that capture contextual meaning in a high-dimensional space. For embedding-based distance calculations, the data management system can generate or retrieve embeddings for items in the user's interaction history, the current search query, and items recalled on SRPs, and employs appropriate distance metrics to determine similarity based on these vector representations. Distance calculation metrics used for embedding-based similarity determination can include, without limitation, cosine similarity metric, Euclidean distance metric, Manhattan distance metric, Minkowski distance metric, and Hamming distance metric.

In various examples, the data management system uses a machine learning model to rank the queried items (e.g., the second plurality of items) based on the plurality of contextual distances. The queried items are also referred to as the recalled items. This machine learning model can be a Machine Learning Ranker (MLR) model trained to predict items relevant to buyers' search queries, personal preferences, and behavioral patterns. The MLR model can assign appropriate weights to contextual features, allowing it to predict the relevance of each recalled item (also referred to as queried item or search result item) based on its similarity (represented by contextual distances) to the reference item. Based on the prediction, the MLR model ranks the recalled items according to their respective contextual distances from the reference item. In particular, the recalled items are rearranged based on contextual distance scores assigned to each item. The item with the highest contextual relevance, indicated by the highest contextual distance score (or by the shortest contextual distance), is ranked first, as it is the one the user is most likely to view and purchase. For example, if a user searches for "wireless headphones," the system recalls several relevant items such as over-ear headphones, earbuds, and headsets from the product catalog. Each recalled item is then assigned a contextual distance score based on how closely it aligns with the user's search intent and past interactions (e.g., items previously viewed or purchased). An item like wireless over-ear headphones' may have a smaller contextual distance score than "wired earbuds," indicating a higher relevance. As a result, the over-ear headphones will be ranked higher on the search results page presented to the user, improving the user's experience by showing more relevant items first.

In various examples, the data management system causes the display of the ranked items (e.g., the second plurality of items) on the device. The ranked items are arranged in an order of contextual relevance described herein.

In various examples, the data management system uses one or more distance calculation metrics to determine a plurality of contextual distances (e.g., the second plurality of contextual distances) based on the current search query and the items (e.g., the first plurality of items) that the user has recently interacted with (e.g., viewed, clicked, or made purchases). Each contextual distance represents a contextual relatedness between the search query and a corresponding item in the first plurality of items.

In various examples, the data management system ranks the second plurality of contextual distances in ascending order and identifies the item with a top-ranked (shortest) contextual distance as a reference item. The reference item is closely aligned with the user's immediate search intent, serving as a key reference point for downstream operations described herein.

In various examples, the data management system uses one or more distance calculation metrics to configure a plurality of contextual features based on the contextual distances (e.g., the first plurality of contextual distances) between the reference item and each queried item on the SRP and the contextual distances (e.g., the second plurality of contextual distances) between the current search query and items the user has recently interacted with (e.g., viewed, clicked, or made purchases).

In various examples, the data management system trains the machine learning model based on the plurality of contextual features and/or the first plurality of contextual distances and the second plurality of contextual distances described herein. In various examples, the data management system can integrate these contextual features into the feature set of the MLR model to enhance its performance. Specifically, by incorporating the user's search terms, the contextual features leverage the search query's intent to refine the contextualization process. This approach allows the system to identify the reference item from the user's past clicks that aligns most closely with the current query. Doing so reduces noise and allows the MLR model to predict the items most relevant to the buyer's search intent, personal preferences, and behavioral patterns.

In various examples, each contextual distance in the first plurality of contextual distances is determined based on an item characteristic associated with the reference item and an item characteristic associated with a corresponding item in the second plurality of items. Each contextual distance in the second plurality of contextual distances is determined based on the search query and an item characteristic associated with a corresponding item in the first plurality of items. Example item characteristics can include, without limitation, titles, sale prices, item conditions (e.g., new, used, refurbished), and listing types (e.g., auction, fixed price).

In various examples, in response to identifying the items (e.g., the first plurality of items) that the user has recently interacted with (e.g., viewed, clicked, or made purchases), the data management retrieves embeddings (e.g., the first plurality of embeddings) associated with the first plurality of items. Each embedding can be pre-generated and represents an item in the first plurality of items. An embedding for an item can be a vector representation that captures various item characteristics and relationships in a way that makes them suitable for use in machine learning models.

In various examples, the data management system uses a machine learning model to generate a query embedding based on the current search query. The embedding generation operation can be done on the fly. The machine learning model can be a natural language processing model or a deep learning model.

In various examples, the data management system uses one or more distance calculation metrics to identify one or more reference items based on the query embedding and the first plurality of embeddings associated with the first plurality of items described herein.

In various examples, the data management system retrieves embeddings (e.g., the second plurality of embeddings) associated with items (e.g., the second plurality of items) recalled as the result of the execution of the current search query.

In various examples, the data management system retrieves a reference item embedding representing the reference item and uses one or more distance calculation metrics to determine contextual distances (e.g., the first plurality of contextual distances) based on the reference item embedding and the second plurality of embeddings associated with the second plurality of items. Each contextual distance represents a contextual relatedness between the reference item and an item recalled as the result of the execution of the current search query.

Reference will now be made in detail to embodiments of the present disclosure, examples of which are illustrated in the appended drawings. The present disclosure may, however, be embodied in many different forms and should not be construed as being limited to the embodiments set forth herein.

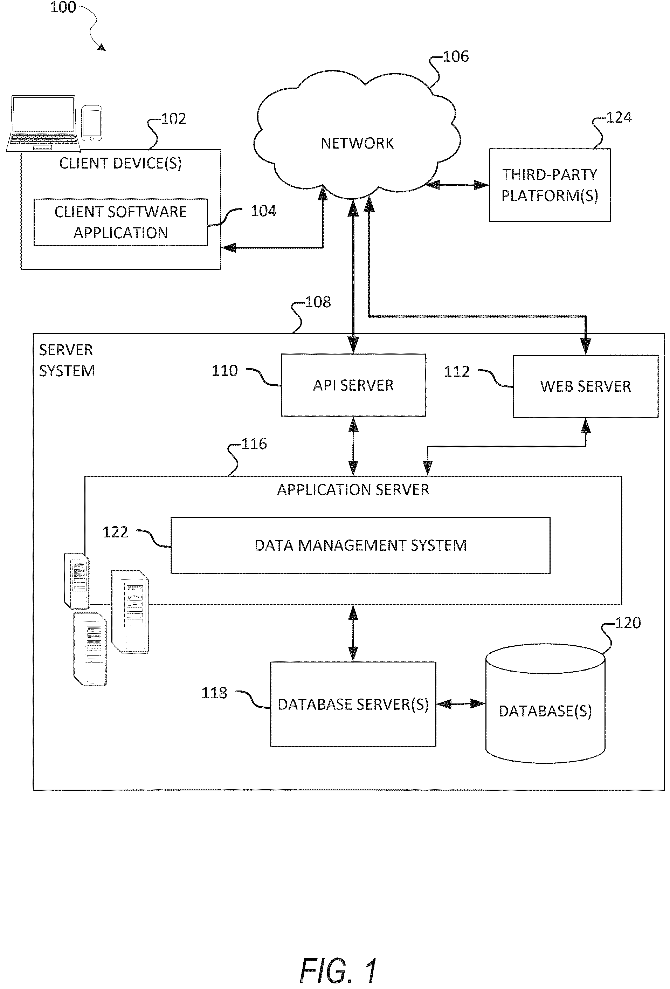

FIG. 1 is a block diagram showing an example data system 100 that includes a data management system 122 (also referred to as system 122), according to various examples of the present disclosure. By including the data management system 122, the data system 100 can facilitate search optimization using query-based contextual features. As shown, the data system 100 includes one or more client devices 102, a server system 108, and a network 106 (e.g., Internet, wide-area-network (WAN), local-area-network (LAN), wireless network) that communicatively couples them together. Each client device 102 can host a number of applications, including a client software application 104. The client software application 104 can communicate data with the server system 108 via a network 106. Accordingly, the client software application 104 can communicate and exchange data with the server system 108 via network 106.

The server system 108 provides server-side functionality via the network 106 to the client software application 104. While certain functions of the data system 100 are described herein as being performed by the data management system 122 on the server system 108, it will be appreciated that the location of certain functionality within the server system 108 is a design choice. For example, it may be technically preferable to initially deploy certain technology and functionality within the server system 108, but to later migrate this technology and functionality to the client software application 104.

The server system 108 supports various services and operations that are provided to the client software application 104 by the data management system 122. Such operations include transmitting data from the data management system 122 to the client software application 104, receiving data from the client software application 104 at the data management system 122, and the data management system 122 processing data generated by the client software application 104. Data exchanges within the data system 100 may be invoked and controlled through operations of software component environments available via one or more endpoints, or functions available via one or more user interfaces of the client software application 104, which may include web-based user interfaces provided by the server system 108 for presentation at the client device 102.

With respect to the server system 108, an Application Program Interface (API) server 110 and a web server 112 is coupled to an application server 116, which hosts the data management system 122. The application server 116 is communicatively coupled to a database server 118, which facilitates access to a database 120 that stores data associated with the application server 116, including data that may be generated or used by the data management system 122.

The API server 110 receives and transmits data (e.g., API calls, commands, requests, responses, and authentication data) between the client device 102 and the application server 116. Specifically, the API server 110 provides a set of interfaces (e.g., routines and protocols) that can be called or queried by the client software application 104 in order to invoke the functionality of the application server 116. The API server 110 exposes various functions supported by the application server 116 including, without limitation, user registration; login functionality; data object operations (e.g., generating, storing, retrieving, encrypting, decrypting, transferring, access rights, licensing); and/or user communications.

Through one or more web-based interfaces (e.g., web-based user interfaces), the web server 112 can support various functionality of the data management system 122 of the application server 116.

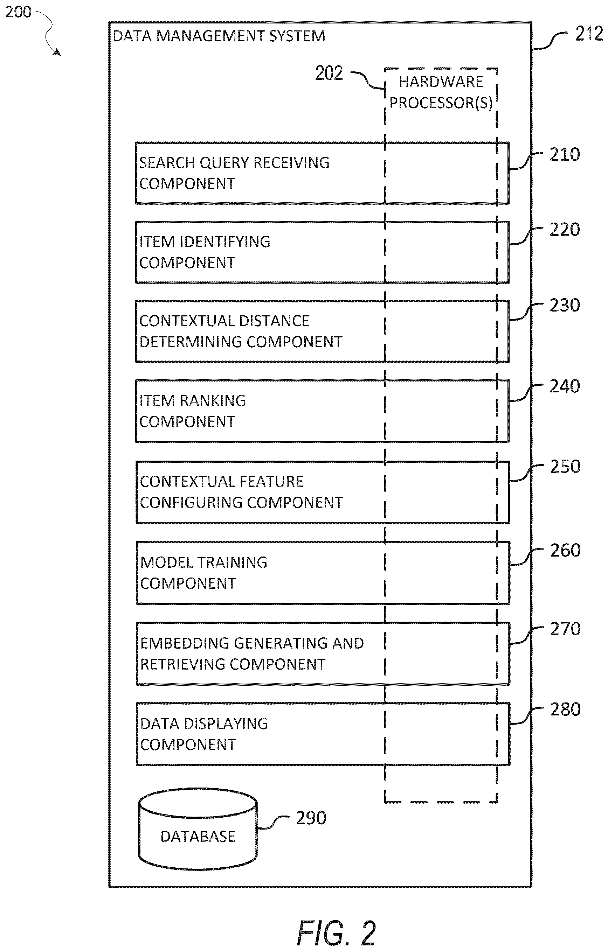

FIG. 2 is a block diagram 200 illustrating an example data management system 212 that facilitates search optimization using query-based contextual features, according to various examples of the present disclosure. For some examples, the data management system 212 represents an example of the data management system 122 described with respect to FIG. 1. As shown, the data management system 212 comprises a search query receiving component 210, an item identifying component 220, a contextual distance determining component 230, an item ranking component 240, a contextual feature configuring component 250, a model training component 260, an embedding generating and retrieving component 270, and a data displaying component 280. According to various examples, one or more of the search query receiving component 210, the item identifying component 220, the contextual distance determining component 230, the item ranking component 240, the contextual feature configuring component 250, the model training component 260, the embedding generating and retrieving component 270, and the data displaying component 280 are implemented by one or more hardware processors 202. Data generated by one or more of the search query receiving component 210, the item identifying component 220, the contextual distance determining component 230, the item ranking component 240, the contextual feature configuring component 250, the model training component 260, the embedding generating and retrieving component 270, and the data displaying component 280 may be stored in a database (or datastore) 290 of the data management system 212.

The search query receiving component 210 is configured to receive search queries via user's devices described herein.

The item identifying component 220 is configured to identify users (e.g., via user identifiers) based on received search queries and identify various items described herein. For example, the item identifying component 220 is configured to identify (or determine) user identifiers based on devices via which search queries were received and is configured to identify items (e.g., the first plurality of items) that the user has recently interacted with (e.g., viewed, clicked, or made purchases). The item identifying component 220 is further configured to identify items (e.g., the second plurality of items) in recalled lists (SPRs) in response to executing the received search queries. The item identifying component 220 is further configured to use one or more distance calculation metrics to identify one or more reference items described herein. In various embodiments, the item identifying component 220 can include subcomponents, such as a user identification component (not shown) and a user behavioral history locating component (not shown).

The contextual distance determining component 230 is configured to use one or more distance calculation metrics to determine various contextual distances described herein, including contextual distances (e.g., the first plurality of contextual distances) between a reference item and each queried item on the SRP, and contextual distances (e.g., the second plurality of contextual distances) between the current search query and items the user has recently interacted with (e.g., viewed, clicked, or made purchases).

The item ranking component 240 is configured to use the MLR model to rank recalled items based on their contextual distances from the reference item.

The contextual feature configuring component 250 is configured to use one or more distance calculation metrics to configure a plurality of contextual features based on the contextual distances (e.g., the first plurality of contextual distances) between the reference item and each c and the contextual distances (e.g., the second plurality of contextual distances) between the current search query and items the user has recently interacted with (e.g., viewed, clicked, or made purchases).

The model training component 260 is configured to train the MLR model based on the plurality of contextual features and/or the first plurality of contextual distances and the second plurality of contextual distances described herein.

The embedding generating and retrieving component 270 is configured to generate or retrieve embeddings for various items described herein, including items retrieved from users' interaction history and items recalled on SRPs. The embedding generating and retrieving component 270 is further configured to generate embeddings for currently received search queries in real time or near real time.

The data displaying component 280 is configured to cause the display of ranked items (e.g., the second plurality of items) on the user devices. Ranked items are arranged in an order of contextual relevance described herein.

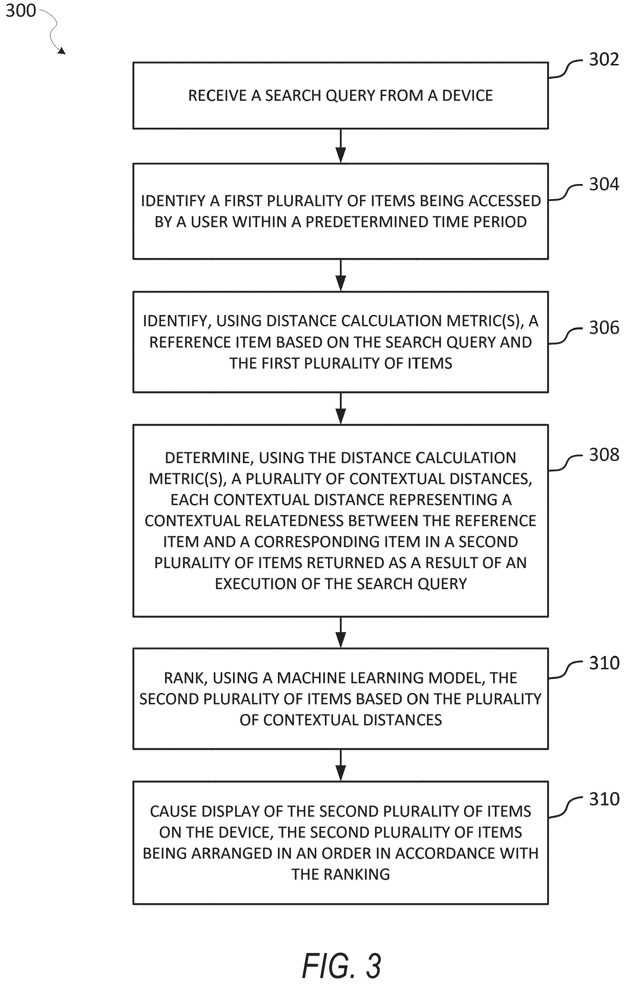

FIG. 3 is a flowchart illustrating an example method 300 for facilitating search optimization using query-based contextual features, according to various examples of the present disclosure. It will be understood that example methods described herein may be performed by a machine in accordance with some examples. For example, method 300 can be performed by the data management system 122 described with respect to FIG. 1, the data management system 212 described with respect to FIG. 2, or individual components thereof. An operation of various methods described herein may be performed by one or more hardware processors (e.g., central processing units or graphics processing units) of a computing device (e.g., a desktop, server, laptop, mobile phone, tablet, etc.), which may be part of a computing system based on a cloud architecture. Example methods described herein may also be implemented in the form of executable instructions stored on a machine-readable medium or in the form of electronic circuitry. For instance, the operations of method 300 may be represented by executable instructions that, when executed by a processor of a computing device, cause the computing device to perform method 300. Depending on the embodiment, an operation of an example method described herein may be repeated in different ways or involve intervening operations not shown. Though the operations of example methods may be depicted and described in a certain order, the order in which the operations are performed may vary among examples, including performing certain operations in parallel.

At operation 302, a processor receives search queries via user's devices. Received search queries can serve as direct indicators of users' immediate search intent.

At operation 304, a processor identifies items (e.g., the first plurality of items) that a user has recently interacted with (e.g., viewed, clicked, or made purchases). The recency of the interaction history can be defined by a predetermined time period, such as a day, a month, or a few months. Since users often follow patterns in their search journeys, the items they've recently interacted with provide a key reference point for identifying items they are most interested in.

At operation 306, a processor uses one or more distance calculation metrics to identify one or more reference items based on the search query and the first plurality of items. A reference item is selected based on its contextual distance to the current search query and is considered to be the best representative of the user's immediate search intent in the context of their recent browsing history. A distance calculation metric can be a mathematical function that measures contextual distance between objects (e.g., data points). A shorter distance indicates greater relevance (or similarity) between data points, and a longer distance suggests the opposite.

At operation 308, a processor executes the received search query against one or more databases and identifies queried items (e.g., the second plurality of items) arranged in a certain order (e.g., default order) on a Search Result Page (SRP). The processor uses one or more distance calculation metrics to determine a plurality of contextual distances (e.g., the first plurality of contextual distances) between a reference item and each queried item on the SRP.

At operation 310, a processor uses a machine learning model (e.g., a Machine Learning Ranker (MLR) model) to rank the queried items (e.g., the second plurality of items) based on the plurality of contextual distances. The queried items are also referred to as the recalled items. The MLR model is trained to predict items relevant to buyers' search queries, personal preferences, and behavioral patterns. The MLR model can assign appropriate weights to contextual features, allowing it to predict the relevance of each recalled item (also referred to as queried item or search result item) based on its similarity (represented by contextual distances) to the reference item. Based on the prediction, the MLR model ranks the recalled items according to their respective contextual distances from the reference item.

At operation 312, a processor causes the display of the ranked items (e.g., the second plurality of items) on the device. The ranked items are arranged in an order of contextual relevance described herein. This approach provides users with a personalized search experience that reflects their personal preferences, interaction histories (e.g., past clicks), and immediate search goals.

Though not illustrated, method 300 can include an operation where a graphical user interface is displayed (or caused to be displayed) by the hardware processor. For instance, the operation can cause a client device (e.g., the client device 102 communicatively coupled to the data management system 122) to display the graphical user interface. This operation for displaying the graphical user interface can be separate from operations 302 through 312 or, alternatively, form part of one or more of operations 302 through 312.

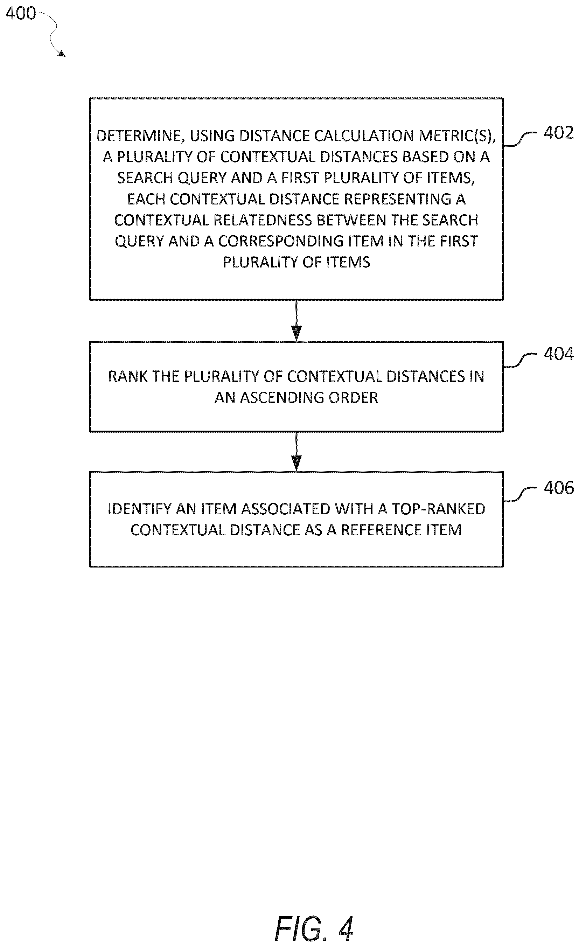

FIG. 4 is a flowchart illustrating an example method 400 for facilitating search optimization using query-based contextual features, according to various examples of the present disclosure. It will be understood that example methods described herein may be performed by a machine in accordance with some examples. For example, method 400 can be performed by the data management system 122 described with respect to FIG. 1, the data management system 212 described with respect to FIG. 2, or individual components thereof. An operation of various methods described herein may be performed by one or more hardware processors (e.g., central processing units or graphics processing units) of a computing device (e.g., a desktop, server, laptop, mobile phone, tablet, etc.), which may be part of a computing system based on a cloud architecture. Example methods described herein may also be implemented in the form of executable instructions stored on a machine-readable medium or in the form of electronic circuitry. For instance, the operations of method 400 may be represented by executable instructions that, when executed by a processor of a computing device, cause the computing device to perform method 400. Depending on the embodiment, an operation of an example method described herein may be repeated in different ways or involve intervening operations not shown. Though the operations of example methods may be depicted and described in a certain order, the order in which the operations are performed may vary among examples, including performing certain operations in parallel. Operations in method 400 can be performed dependently or independently from operations in method 300.

At operation 402, a processor uses one or more distance calculation metrics to determine a plurality of contextual distances (e.g., the second plurality of contextual distances) based on the received search query and the items (e.g., the first plurality of items) that the user has recently interacted with (e.g., viewed, clicked, or made purchases). A distance calculation metric can be a mathematical function that measures contextual distance between objects (e.g., data points). A shorter distance indicates greater relevance (or similarity) between data points, and a longer distance suggests the opposite. Example distance calculation metrics include, without limitation, normalized compression Distance (NCD) metric, Jaccard Unigrams Similarity metric, Jaccard Bigrams Similarity metric, Jaccard Trigrams Similarity metric, cosine similarity metric, Euclidean distance metric, Manhattan distance metric, Minkowski distance metric, and Hamming distance metric.

At operation 404, a processor ranks the second plurality of contextual distances in ascending order so that the shortest contextual distance is ranked at the top. A shorter contextual distance indicates a closer and stronger relationship between the received search query and a previously interacted item.

At operation 406, a processor identifies the item with a top-ranked (shortest) contextual distance as a reference item described herein.

Though not illustrated, method 400 can include an operation where a graphical user interface can be displayed (or caused to be displayed) by the hardware processor. For instance, the operation can cause a client device (e.g., the client device 102 communicatively coupled to the data management system 122) to display the graphical user interface. This operation for displaying the graphical user interface can be separate from operations 402 through 406 or, alternatively, form part of one or more of operations 402 through 406.

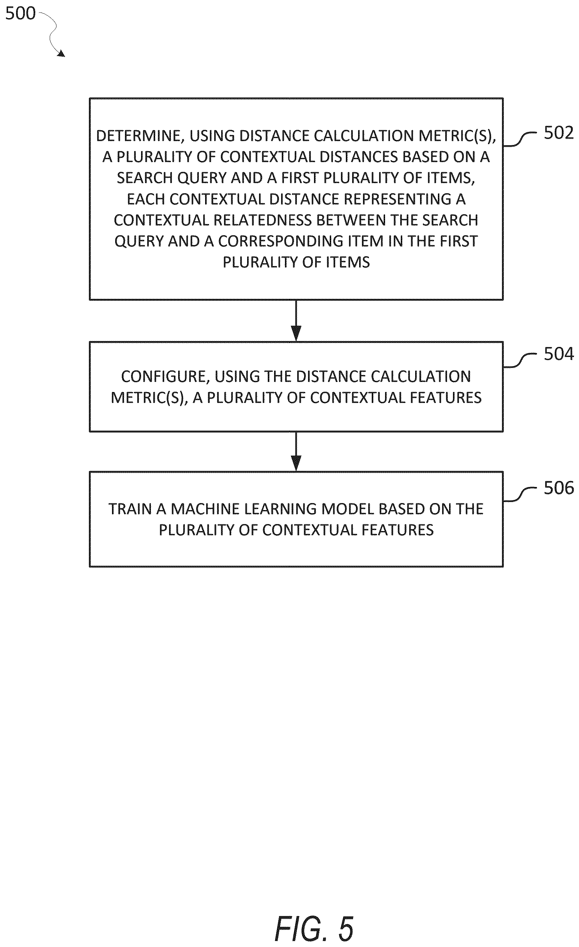

FIG. 5 is a flowchart illustrating an example method 500 for facilitating search optimization using query-based contextual features, according to various examples of the present disclosure. It will be understood that example methods described herein may be performed by a machine in accordance with some examples. For example, method 500 can be performed by the data management system 122 described with respect to FIG. 1, the data management system 212 described with respect to FIG. 2, or individual components thereof. An operation of various methods described herein may be performed by one or more hardware processors (e.g., central processing units or graphics processing units) of a computing device (e.g., a desktop, server, laptop, mobile phone, tablet, etc.), which may be part of a computing system based on a cloud architecture. Example methods described herein may also be implemented in the form of executable instructions stored on a machine-readable medium or in the form of electronic circuitry. For instance, the operations of method 500 may be represented by executable instructions that, when executed by a processor of a computing device, cause the computing device to perform method 500. Depending on the embodiment, an operation of an example method described herein may be repeated in different ways or involve intervening operations not shown. Though the operations of example methods may be depicted and described in a certain order, the order in which the operations are performed may vary among examples, including performing certain operations in parallel. Operations in method 500 can be performed dependently or independently from operations in method 300 and method 400.

At operation 502, a processor uses one or more distance calculation metrics to determine a plurality of contextual distances (e.g., the second plurality of contextual distances) based on the received search query and the items (e.g., the first plurality of items) that the user has recently interacted with (e.g., viewed, clicked, or made purchases).

At operation 504, a processor uses one or more distance calculation metrics to configure a plurality of contextual features based on the contextual distances (e.g., the first plurality of contextual distances) between the reference item and each queried item on the SRP and the contextual distances (e.g., the second plurality of contextual distances) between the current search query and items the user has recently interacted with (e.g., viewed, clicked, or made purchases).

At operation 506, a processor trains a machine learning model (e.g., the MLR model) based on the plurality of contextual features and/or the first plurality of contextual distances and the second plurality of contextual distances described herein. These contextual features are integrated into the feature set of the MLR model to enhance its performance. Specifically, by incorporating the user's search queries and item characteristics via these contextual features, the MLR model can make predictions that are most relevant to the buyer's search intent, personal preferences, and behavioral patterns.

Though not illustrated, method 500 can include an operation where a graphical user interface can be displayed (or caused to be displayed) by the hardware processor. For instance, the operation can cause a client device (e.g., the client device 102 communicatively coupled to the data management system 122) to display the graphical user interface. This operation for displaying the graphical user interface can be separate from operations 502 through 506 or, alternatively, form part of one or more of operations 502 through 506.

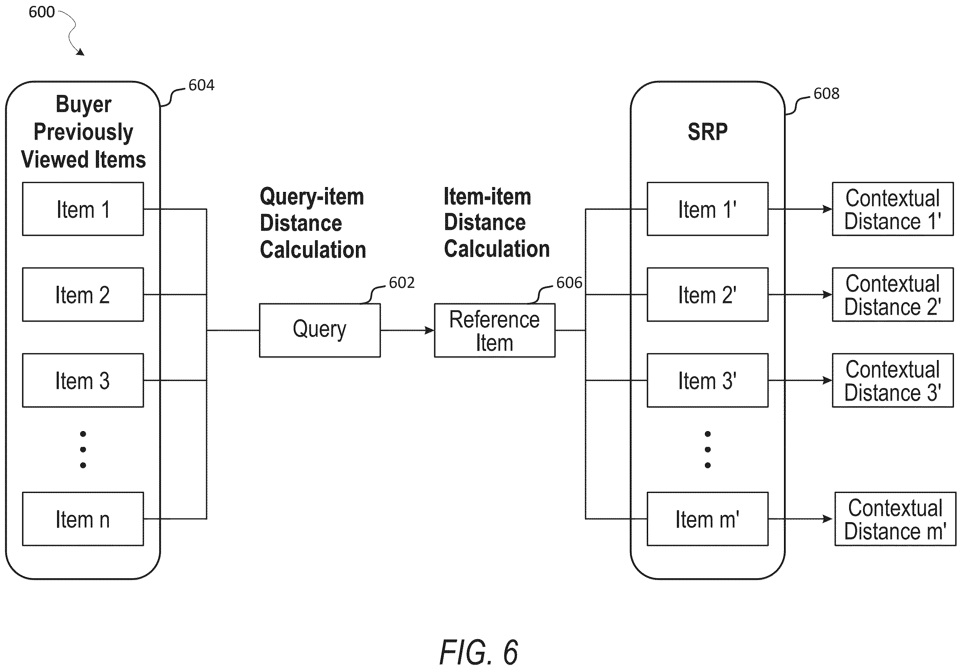

FIG. 6 is a diagram illustrating a data flow 600 that facilitates search optimization using query-based contextual features, according to various examples of the present disclosure. As shown, a buyer's current search query 602 is received, either in normalized text format or as a query embedding. Buyer previously viewed items 604 are identified based on a user identifier associated with the search query 602. Items 604 can be identified based on the buyer's previous clicks. Next, the contextual distances between the search query 602 and the items 604 are calculated. Reference item 606 with the closest match to the search query 602 is identified. Reference item 606 indicates the smallest semantic distance (or contextual distance) and is assumed to effectively represent the buyer's current search intent and preferences. Reference item 606 is then used as a reference to score the items in SRP 608 (also referred to as a recall set). The contextual distances between the reference item and recalled item (e.g., items 1', 2', 3'...m') are calculated, and are used as contextual feature scores. When contextual features are fed into the MLR model (not shown), the model is capable of ranking the recalled items to closely align with the reference item based on the contextual distances (represented by the contextual feature scores).

In various embodiments, contextual features can be configured to include query-title contextual features and query-price contextual features. Each contextual feature can be represented by a string (used in code). An example string can indicate one or more of a number of past clicked items identified based on a user identifier associated with a device via which a search query is received; item titles used as item characteristics for contextual distance calculation; and the metric (e.g., Normalized Compression Distance (NCD)) used for distance calculation.

In various embodiments, incorporating query-based contextual features into the MLR model training can influence the importance of the existing contextual features. These existing features derive their value from fields (or item characteristics) such as item titles and prices, utilizing them to measure the contextual distance (or similarity) between past clicked items and presently recalled items. With the integration of query contextual features, a shift in the importance of other features is observed based on the model performance. However, based on the feature importance from models trained with and without the query-based contextual features, it is evident that the existing contextual features maintain their significance, with their importance experiencing a slight alteration.

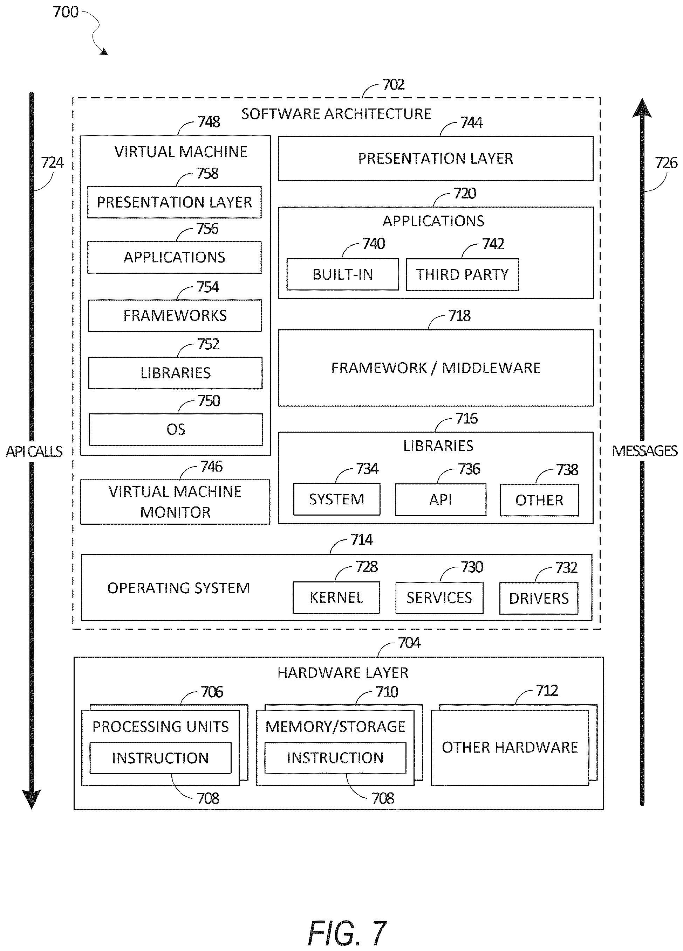

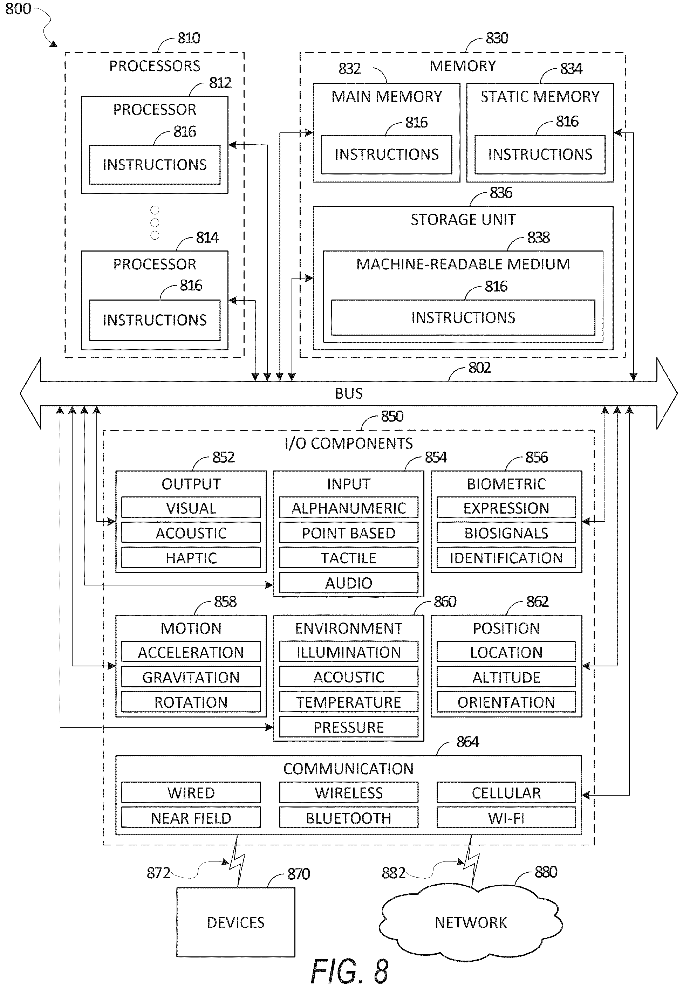

FIG. 7 is a block diagram illustrating an example of a software architecture 702 that may be installed on a machine, according to some examples. FIG. 7 is merely a non-limiting example of software architecture, and it will be appreciated that many other architectures may be implemented to facilitate the functionality described herein. The software architecture 702 may be executing on hardware such as a machine 800 of FIG. 8 that includes, among other things, processors 810, memory 830, and input/output (I/O) components 850. A representative hardware layer 704 is illustrated and can represent, for example, the machine 800 of FIG. 8. The representative hardware layer 704 comprises one or more processing units 706 having associated executable instructions 708. The executable instructions 708 represent the executable instructions of the software architecture 702. The hardware layer 704 also includes memory or storage modules 710, which also have the executable instructions 708. The hardware layer 704 may also comprise other hardware 712, which represents any other hardware of the hardware layer 704, such as the other hardware illustrated as part of the machine 800.

In the example architecture of FIG. 7, the software architecture 702 may be conceptualized as a stack of layers, where each layer provides particular functionality. For example, the software architecture 702 may include layers such as an operating system 714, libraries 716, frameworks/middleware 718, applications 720, and a presentation layer 744. Operationally, the applications 720 or other components within the layers may invoke API calls 724 through the software stack and receive a response, returned values, and so forth (illustrated as messages 726) in response to the API calls 724. The layers illustrated are representative in nature, and not all software architectures have all layers. For example, some mobile or special-purpose operating systems may not provide a frameworks/middleware 718 layer, while others may provide such a layer. Other software architectures may include additional or different layers.

The operating system 714 may manage hardware resources and provide common services. The operating system 714 may include, for example, a kernel 728, services 730, and drivers 732. The kernel 728 may act as an abstraction layer between the hardware and the other software layers. For example, the kernel 728 may be responsible for memory management, processor management (e.g., scheduling), component management, networking, security settings, and so on. The services 730 may provide other common services for the other software layers. The drivers 732 may be responsible for controlling or interfacing with the underlying hardware. For instance, the drivers 732 may include display drivers, camera drivers, Bluetooth^{®} drivers, flash memory drivers, serial communication drivers (e.g., Universal Serial Bus (USB) drivers), Wi-Fi^{®} drivers, audio drivers, power management drivers, and so forth depending on the hardware configuration.

The libraries 716 may provide a common infrastructure that may be utilized by the applications 720 and/or other components and/or layers. The libraries 716 typically provide functionality that allows other software modules to perform tasks in an easier fashion than by interfacing directly with the underlying operating system 714 functionality (e.g., kernel 728, services 730, or drivers 732). The libraries 716 may include system libraries 734 (e.g., C standard library) that may provide functions such as memory allocation functions, string manipulation functions, mathematic functions, and the like. In addition, the libraries 716 may include API libraries 736 such as media libraries (e.g., libraries to support presentation and manipulation of various media formats such as MPEG4, H.264, MP3, AAC, AMR, JPG, and PNG), graphics libraries (e.g., an OpenGL framework that may be used to render 2D and 3D graphic content on a display), database libraries (e.g., SQLite that may provide various relational database functions), web libraries (e.g., WebKit that may provide web browsing functionality), and the like. The libraries 716 may also include a wide variety of other libraries 738 to provide many other APIs to the applications 720 and other software components/modules.

The frameworks 718 (also sometimes referred to as middleware) may provide a higher-level common infrastructure that may be utilized by the applications 720 or other software components/modules. For example, the frameworks 718 may provide various graphical user interface functions, high-level resource management, high-level location services, and so forth. The frameworks 718 may provide a broad spectrum of other APIs that may be utilized by the applications 720 and/or other software components/modules, some of which may be specific to a particular operating system or platform.

The applications 720 include built-in applications 740 and/or third-party applications 742. Examples of representative built-in applications 740 may include, but are not limited to, a home application, a contacts application, a browser application, a book reader application, a location application, a media application, a messaging application, or a game application.

The third-party applications 742 may include any of the built-in applications 740, as well as a broad assortment of other applications. In a specific example, the third-party applications 742 (e.g., an application developed using the Android^{™} or iOS^{™} software development kit (SDK) by an entity other than the vendor of the particular platform) may be mobile software running on a mobile operating system such as iOS^{™}, Android^{™}, or other mobile operating systems. In this example, the third-party applications 742 may invoke the API calls 724 provided by the mobile operating system such as the operating system 714 to facilitate functionality described herein.

The applications 720 may utilize built-in operating system functions (e.g., kernel 728, services 730, or drivers 732), libraries (e.g., system libraries 734, API libraries 736, and other libraries 738), or frameworks/middleware 718 to create user interfaces to interact with users of the system. Alternatively, or additionally, in some systems, interactions with a user may occur through a presentation layer, such as the presentation layer 744. In these systems, the application/module "logic" can be separated from the aspects of the application/module that interact with the user.

Some software architectures utilize virtual machines. In the example of FIG. 7, this is illustrated by a virtual machine 748. The virtual machine 748 creates a software environment where applications/modules can execute as if they were executing on a hardware machine (e.g., the machine 800 of FIG. 8). The virtual machine 748 is hosted by a host operating system (e.g., the operating system 714) and typically, although not always, has a virtual machine monitor 746, which manages the operation of the virtual machine 748 as well as the interface with the host operating system (e.g., the operating system 714). A software architecture executes within the virtual machine 748, such as an operating system 750, libraries 752, frameworks 754, applications 756, or a presentation layer 758. These layers of software architecture executing within the virtual machine 748 can be the same as corresponding layers previously described or may be different.

FIG. 8 illustrates a diagrammatic representation of a machine 800 in the form of a computer system within which a set of instructions may be executed for causing the machine 800 to perform any one or more of the methodologies discussed herein, according to some examples. Specifically, FIG. 8 shows a diagrammatic representation of the machine 800 in the example form of a computer system, within which instructions 816 (e.g., software, a program, an application, an applet, an app, or other executable code) for causing the machine 800 to perform any one or more of the methodologies discussed herein may be executed. For example, the instructions 816 may cause the machine 800 to execute method 300 described above with respect to FIG. 3, method 400 described above with respect to FIG. 4, and method 500 described above with respect to FIG. 5. The instructions 816 transform the general, non-programmed machine 800 into a particular machine 800 programmed to carry out the described and illustrated functions in the manner described. In alternative examples, the machine 800 operates as a standalone device or may be coupled (e.g., networked) to other machines. In a networked deployment, the machine 800 may operate in the capacity of a server machine or a client machine in a server-client network environment, or as a peer machine in a peer-to-peer (or distributed) network environment. The machine 800 may comprise, but not be limited to, a server computer, a client computer, a personal computer (PC), a tablet computer, a laptop computer, a netbook, a personal digital assistant (PDA), an entertainment media system, a cellular telephone, a smart phone, a mobile device, or any machine capable of executing the instructions 816, sequentially or otherwise, that specify actions to be taken by the machine 800. Further, while only a single machine 800 is illustrated, the term "machine" shall also be taken to include a collection of machines 800 that individually or jointly execute the instructions 816 to perform any one or more of the methodologies discussed herein.

The machine 800 may include processors 810, memory 830, and I/O components 850, which may be configured to communicate with each other such as via a bus 802. In an example, the processors 810 (e.g., a hardware processor, such as a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 812 and a processor 814 that may execute the instructions 816. The term "processor" is intended to include multi-core processors that may comprise two or more independent processors (sometimes referred to as "cores") that may execute instructions contemporaneously. Although FIG. 8 shows multiple processors 810, the machine 800 may include a single processor with a single core, a single processor with multiple cores (e.g., a multi-core processor), multiple processors with a single core, multiple processors with multiples cores, or any combination thereof.

The memory 830 may include a main memory 832, a static memory 834, and a storage unit 836 including machine-readable medium 838, each accessible to the processors 810 such as via the bus 802. The main memory 832, the static memory 834, and the storage unit 836 store the instructions 816 embodying any one or more of the methodologies or functions described herein. The instructions 816 may also reside, completely or partially, within the main memory 832, within the static memory 834, within the storage unit 836, within at least one of the processors 810 (e.g., within the processor's cache memory), or any suitable combination thereof, during execution thereof by the machine 800.

The I/O components 850 may include a wide variety of components to receive input, provide output, produce output, transmit information, exchange information, capture measurements, and so on. The specific I/O components 850 that are included in a particular machine will depend on the type of machine. For example, portable machines such as mobile phones will likely include a touch input device or other such input mechanisms, while a headless server machine will likely not include such a touch input device. It will be appreciated that the I/O components 850 may include many other components that are not shown in FIG. 8. The I/O components 850 are grouped according to functionality merely for simplifying the following discussion, and the grouping is in no way limiting. In some examples, the I/O components 850 may include output components 852 and input components 854. The output components 852 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 854 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further examples, the I/O components 850 may include biometric components 856, motion components 858, environmental components 860, or position components 862, among a wide array of other components. The motion components 858 may include acceleration sensor components (e.g., accelerometer), gravitation sensor components, rotation sensor components (e.g., gyroscope), and so forth. The environmental components 860 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 862 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 850 may include communication components 864 operable to couple the machine 800 to a network 880 or devices 870 via a coupling 882 and a coupling 872, respectively. For example, the communication components 864 may include a network interface component or another suitable device to interface with the network 880. In further examples, the communication components 864 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 870 may be another machine or any of a wide variety of peripheral devices (e.g., a peripheral device coupled via a USB).

Moreover, the communication components 864 may detect identifiers or include components operable to detect identifiers. For example, the communication components 864 may include radio frequency identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, Ultra Code, UCC RSS-2D bar code, and other optical codes), or acoustic detection components (e.g., microphones to identify tagged audio signals). In addition, a variety of information may be derived via the communication components 864, such as location via Internet Protocol (IP) geolocation, location via Wi-Fi^{®} signal triangulation, location via detecting an NFC beacon signal that may indicate a particular location, and so forth.

Certain examples are described herein as including logic or a number of components, modules, elements, or mechanisms. Such modules can constitute either software modules (e.g., code embodied on a machine-readable medium or in a transmission signal) or hardware modules. A "hardware module" is a tangible unit capable of performing certain operations and can be configured or arranged in a certain physical manner. In various example embodiments, one or more computer systems (e.g., a standalone computer system, a client computer system, or a server computer system) or one or more hardware modules of a computer system (e.g., a processor or a group of processors) are configured by software (e.g., an application or application portion) as a hardware module that operates to perform certain operations as described herein.

In some examples, a hardware module is implemented mechanically, electronically, or any suitable combination thereof. For example, a hardware module can include dedicated circuitry or logic that is permanently configured to perform certain operations. For example, a hardware module can be a special-purpose processor, such as a field-programmable gate array (FPGA) or an ASIC. A hardware module may also include programmable logic or circuitry that is temporarily configured by software to perform certain operations. For example, a hardware module can include software encompassed within a general-purpose processor or other programmable processor. It will be appreciated that the decision to implement a hardware module mechanically, in dedicated and permanently configured circuitry, or in temporarily configured circuitry (e.g., configured by software) can be driven by cost and time considerations.

Accordingly, the phrase "module" should be understood to encompass a tangible entity, be that an entity that is physically constructed, permanently configured (e.g., hardwired), or temporarily configured (e.g., programmed) to operate in a certain manner or to perform certain operations described herein. Considering examples in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software can accordingly configure a particular processor or processors, for example, to constitute a particular hardware module at one instance of time and to constitute a different hardware module at a different instance of time.

Hardware modules can provide information to, and receive information from, other hardware modules. Accordingly, the described hardware modules can be regarded as being communicatively coupled. Where multiple hardware modules exist contemporaneously, communications can be achieved through signal transmission (e.g., over appropriate circuits and buses) between or among two or more of the hardware modules. In examples in which multiple hardware modules are configured or instantiated at different times, communications between or among such hardware modules may be achieved, for example, through the storage and retrieval of information in memory structures to which the multiple hardware modules have access. For example, one hardware module performs an operation and stores the output of that operation in a memory device to which it is communicatively coupled. A further hardware module can then, at a later time, access the memory device to retrieve and process the stored output. Hardware modules can also initiate communications with input or output devices, and can operate on a resource (e.g., a collection of information).

The various operations of example methods described herein can be performed, at least partially, by one or more processors that are temporarily configured (e.g., by software) or permanently configured to perform the relevant operations. Whether temporarily or permanently configured, such processors constitute processor-implemented modules that operate to perform one or more operations or functions described herein. As used herein, "processor-implemented module" refers to a hardware module implemented using one or more processors.

Similarly, the methods described herein can be at least partially processor-implemented, with a particular processor or processors being an example of hardware. For example, at least some of the operations of a method can be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines 800 including processors 810), with these operations being accessible via a network (e.g., the Internet) and via one or more appropriate interfaces (e.g., an API). In certain embodiments, for example, a client device may relay or operate in communication with cloud computing systems and may access circuit design information in a cloud environment.

The performance of certain of the operations may be distributed among the processors, not only residing within a single machine 800, but deployed across a number of machines 800. In some examples, the processors 810 or processor-implemented modules are located in a single geographic location (e.g., within a home environment, an office environment, or a server farm). In other example embodiments, the processors or processor-implemented modules are distributed across a number of geographic locations.

The various memories (i.e., 830, 832, 834, and/or the memory of the processor(s) 810) and/or the storage unit 836 may store one or more sets of instructions 816 and data structures (e.g., software) embodying or utilized by any one or more of the methodologies or functions described herein. These instructions (e.g., the instructions 816), when executed by the processor(s) 810, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions 816 and/or data. The terms shall accordingly be taken to include, but not be limited to, solid-state memories, and optical and magnetic media, including memory internal or external to processors. Specific examples of machine-storage media, computer-storage media and/or device-storage media include nonvolatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In some examples, one or more portions of the network 880 may be an ad hoc network, an intranet, an extranet, a virtual private network (VPN), a LAN, a wireless LAN (WLAN), a WAN, a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 880 or a portion of the network 880 may include a wireless or cellular network, and the coupling 882 may be a Code Division Multiple Access (CDMA) connection, a Global System for Mobile communications (GSM) connection, or another type of cellular or wireless coupling. In this example, the coupling 882 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions may be transmitted or received over the network using a transmission medium via a network interface device (e.g., a network interface component included in the communication components) and utilizing any one of a number of well-known transfer protocols (e.g., hypertext transfer protocol (HTTP)). Similarly, the instructions may be transmitted or received using a transmission medium via the coupling (e.g., a peer-to-peer coupling) to the devices 870. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions for execution by the machine, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals. For instance, an embodiment described herein can be implemented using a non-transitory medium (e.g., a non-transitory computer-readable medium).

Throughout this specification, plural instances may implement resources, components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components.

As used herein, the term "or" may be construed in either an inclusive or exclusive sense. The terms "a" or "an" should be read as meaning "at least one," "one or more," or the like. The presence of broadening words and phrases such as "one or more," "at least," "but not limited to," or other like phrases in some instances shall not be read to mean that the narrower case is intended or required in instances where such broadening phrases may be absent. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. The specification and drawings are, accordingly, to be regarded in an illustrative rather than a restrictive sense.

It will be understood that changes and modifications may be made to the disclosed embodiments without departing from the scope of the present disclosure. These and other changes or modifications are intended to be included within the scope of the present disclosure.

## Claims

1. A method comprising:
receiving a search query;
identifying a first plurality of items being accessed by a user within a predetermined time period;
identifying, using a distance calculation metric, a reference item based on the search query and the first plurality of items;
determining, using the distance calculation metric, a plurality of contextual distances, each contextual distance representing a contextual relatedness between the reference item and a corresponding item in a second plurality of items returned as a result of an execution of the search query;
ranking, using a machine learning model, the second plurality of items based on the plurality of contextual distances; and
causing display of the second plurality of items, the second plurality of items being arranged in an order based on the ranking.

2. The method of claim 1, wherein the plurality of contextual distances is a first plurality of contextual distances, comprising:
determining, using the distance calculation metric, a second plurality of contextual distances based on the search query and the first plurality of items, each contextual distance representing a contextual relatedness between the search query and a corresponding item in the first plurality of items.

3. The method of claim 2, comprising:
ranking the second plurality of contextual distances in ascending order; and
identifying an item associated with a top-ranked contextual distance as the reference item.

4. The method of claim 2 or 3, comprising:
configuring, using one or more distance calculation metrics, a plurality of contextual features based on the first plurality of contextual distances and the second plurality of contextual distances; and
training the machine learning model based on the plurality of contextual features.

5. The method of any of claims 2-4, wherein each contextual distance in the first plurality of contextual distances is determined based on an item characteristic associated with the reference item and an item characteristic associated with a corresponding item in the second plurality of items, wherein each contextual distance in the second plurality of contextual distances is determined based on the search query and an item characteristic associated with a corresponding item in the first plurality of items.

6. The method of any one of the preceding claims, wherein the machine learning model comprises a Machine Learning Ranker (MLR) model, wherein an item characteristic comprises at least one of a title, a sale price, a condition state, or a listing type.

7. The method of any one of the preceding claims, wherein the reference item is identified based on textual data representing the search query and the first plurality of items, and wherein the distance calculation metric comprises one of a normalized compression Distance (NCD) metric, a Jaccard Unigrams Similarity metric, a Jaccard Bigrams Similarity metric, or a Jaccard Trigrams Similarity metric.

8. The method of any one of the preceding claims, comprising:
in response to identifying the first plurality of items, retrieving a first plurality of embeddings associated with the first plurality of items, each embedding representing an item in the first plurality of items;
generating a query embedding based on the search query; and
identifying, using the distance calculation metric, the reference item based on the query embedding and the first plurality of embeddings associated with the first plurality of items.

9. The method of claim 8, comprising:
retrieving a second plurality of embeddings associated with the second plurality of items returned as the result of the execution of the search query;
retrieving a reference item embedding representing the reference item; and
determining, using the distance calculation metric, the plurality of contextual distances based on the reference item embedding and the second plurality of embeddings associated with the second plurality of items.

10. The method of any one of the preceding claims, wherein the reference item is identified based on embedding-based data representing the search query and the first plurality of items, and wherein the distance calculation metric comprises one of a cosine similarity metric, an Euclidean distance metric, a Manhattan distance metric, a Minkowski distance metric, or a Hamming distance metric.

11. A system comprising:
one or more hardware processors; and
at least one machine-storage medium for storing instructions that, when executed by the one or more hardware processors, cause the one or more hardware processors to perform the method according to any one of claims 1-10.

12. A machine-storage medium for storing instructions that, when executed by one or more hardware processors, cause the one or more hardware processors to perform the method according to any one of claims 1-10.
